# EUROPÄISCHE PATENTSCHRIFT

(11) **EP 1 660 262 B1**
(45) Veröffentlichungstag und Bekanntmachung des Hinweises auf die Patenterteilung: **16.04.2008**
(21) Anmeldenummer: 04739963.9
(22) Anmeldetag: 17.06.2004
(51) Int. Cl.: B23B 31/107

(54) **SCHNITTSTELLE EINES WERKZEUGS**
INTERFACE OF A TOOL
POINT D'ASSEMBLAGE D'UN OUTIL

(30) Priorität: 22.08.2003 DE 10338610
(43) Veröffentlichungstag der Anmeldung: 31.05.2006
(73) Patentinhaber: MAPAL Fabrik für Präzisionswerkzeuge Dr. Kress KG, D-73431 Aalen (DE)
(72) Erfinder: KRESS, Dieter, 73431 Aalen (DE); HÄBERLE, Friedrich, 73466 Lauchheim (DE)
(74) Vertreter: Gleiss, Alf-Olav
(86) Internationale Anmeldenummer: PCT/EP2004/006501
(87) Internationale Veröffentlichungsnummer: WO 2005/028148

(56) Entgegenhaltungen:
- EP-A- 0 295 315
- WO-A-93/10930
- WO-A-99/37428

## Beschreibung

Die Erfindung betrifft eine Schnittstelle eines Werkzeugs gemäß Oberbegriff des Anspruchs 1.

Schnittstellen der hier angesprochenen Art sind bekannt (siehe z.B. WO9937428). Mit dem Begriff Schnittstelle wird die Verbindungsstelle zwischen einer Maschinenspindel und einem Werkzeug, einer Maschinenspindel und einem Adapter, einem Adapter und einem Werkzeug und dergleichen bezeichnet, also allgemein die Verbindungsstelle zwischen zwei Elementen eines Werkzeugsystems. Bei den hier angesprochenen Werkzeugen handelt es sich um solche, die mittels einer geometrisch definierten Schneide Späne von einem Werkstück abtragen, wobei in der Regel das Werkzeug in Rotation versetzt wird. Ein erstes Teil der Schnittstelle dient als Aufnahme und weist einen Innenkegel auf, in den ein Hohlschaftkegel eines zweiten Teils der Schnittstelle einführbar ist. Mittels einer Spanneinrichtung wird der Hohlschaftkegel des zweiten Teils in den Innenkegel des ersten Teils hineingezogen, wodurch in der Regel kreisringförmige Planflächen am ersten und zweiten Teil fest aneinander anliegen. Außerdem wird vorzugsweise der Hohlschaftkegel leicht aufgeweitet, so dass er an der Innenfläche des Innenkegels in der Aufnahme anliegt. Dadurch ergibt sich einerseits eine exakte Ausrichtung der beiden Teile der Schnittstelle, andererseits eine sehr hohe Steifigkeit. Die Spanneinrichtung weist eine Spannpatrone mit zwei Spannbacken auf, die über eine Betätigungseinrichtung in radialer Richtung, das heißt senkrecht zur Drehachse des Werkzeugs beweglich sind. Die Spannpatrone ist am ersten Teil so verankert, dass eine axiale Verlagerung verhindert wird. Die Spannbacken wirken mit Spannschultern am Hohlschaftkegel so zusammen, dass dieser in den Innenkegel hineingezogen wird. Die Verlagerung der Spannbacken erfolgt mittels einer Betätigungseinrichtung, die über ein Betätigungselement aktivierbar ist. Bekannte Schnittstellen weisen Spannschrauben auf, die als Betätigungseinrichtung dienen und zwei gegenläufige Gewindeabschnitte aufweisen. Diese wirken mit den Spannbacken zusammen und verlagern diese radial nach außen und innen, je nach Drehrichtung der Spannschraube. Beispielsweise kann ein als Betätigungselement dienender Inbusschlüssel in eine entsprechende Ausnehmung einer Spannschraube eingeführt werden, um diese nach rechts oder links zu drehen.

Bei der Bearbeitung von Werkstücken wird bevorzugt die so genannte Minimalmengenschmierung eingesetzt, bei der an Stelle einer Emulsion ein Luft/Öl-Gemisch als Kühl- und Schmiermittel eingesetzt wird. Das Öl liegt in sehr fein verteilten Tröpfchen vor, die quasi in der Luft schweben und eine Art Nebel bilden, der bei der Bearbeitung eines Werkstücks die Schneide(n) des Werkzeugs und gegebenenfalls dort vorgesehene Führungen benetzt. Bei der Zuführung des Luft/Öl-Gemisches ist es von entscheidender Bedeutung, dass in den Zufuhrkanälen möglichst wenig Umlenkungen, also Abweichungen von einem geradlinigen Verlauf, vorhanden sind, da im Bereich der Umlenkungen Entmischungen und Versackungen auftreten. Bei der hier erläuterten bekannten Schnittstelle, also bei Verwendung einer Spannschraube als Betätigungseinrichtung, ist ein geradliniger Verlauf der Zufuhrkanäle für die Minimalmengenschmierung nicht möglich, weil die Spannschraube quer durch den Grundkörper der Spannpatrone verläuft.

Aufgabe der Erfindung ist es daher, eine Schnittstelle zu schaffen, die sich durch eine verbesserte Kühlmittelzuführung auszeichnet.

Zur Lösung dieser Aufgabe wird eine Schnittstelle vorgeschlagen, welche die in Anspruch 1 genannten Merkmale aufweist. Sie zeichnet sich dadurch aus, dass die Spannpatrone eine durchgehende zentrale Durchgangsöffnung aufweist und dass die Betätigungseinrichtung, die mit den Spannbacken der Spannpatrone zusammenwirkt, als in zwei Funktionsstellungen verlagerbares Rahmenelement ausgebildet ist, das einen zentralen Durchlass für das Kühl-/Schmiermittel aufweist. Dieser ist so angeordnet, dass seine Mittelachsen mit den Mittelachsen des ersten und zweiten Teils zusammenfällt. Dadurch, dass der Durchlass mit Kanalabschnitten im ersten und zweiten Teil fluchtet, werden Umlenkungen vermieden, an denen Entmischungen und Versackungen auftreten können. Die Schnittstelle mit den hier genannten Merkmalen erlaubt daher eine Minimalmengenschmierung ohne dass die genannten Nachteile einträten.

Bevorzugt wird ein Ausführungsbeispiel der Schnittstelle, das sich dadurch auszeichnet, dass die Betätigungseinrichtung über eine erste radiale Ausnehmung im Hohlschaftkegel und über eine mit dieser fluchtende, im ersten Teil vorgesehene zweite radiale Ausnehmung zugänglich ist. Das Betätigungselement zur Aktivierung der Betätigungseinrichtung greift also innerhalb des Kegelabschnitts in die Betätigungseinrichtung ein. Damit ist eine kurze Baulänge im Bereich der Schnittstelle erreichbar, was zu einer hohen Genauigkeit des Rundlaufs der Schneide eines eingespannten Werkzeugs führt.

Bevorzugt wird ein Ausführungsbeispiel der Schnittstelle, das sich dadurch auszeichnet, dass das Rahmenelement mit zwei Zapfen versehen ist, an denen die Spannbacken befestigt sind. Der zweite dieser Zapfen weist ein Gewinde auf, das mit einem in der zugehörigen Spannbacke vorgesehenen Gewinde zusammenwirkt. Auf der Außenseite des zweiten Zapfens ist ein Außengewinde vorgesehen, das mit dem Innengewinde einer Hutmutter zusammenwirkt. Diese weist Ihrerseits auf ihrer Außenseite ein Außengewinde auf, das mit einem Innengewinde in der zugehörigen Spannbacke zusammenwirkt. Wird die Hutmutter mittels eines Betätigungselements gedreht, so wird in einer Drehrichtung die Hutmutter auf dem zugehörigen Zapfen radial nach außen verlagert, ebenso die auf die Hutmutter aufgesetzte Spannbacke. Diese stützt sich auf der Innenseite des Hohlschaftkegels ab, so dass auch die gegenüber liegende am Rahmenelement befestigte Spannbacke in Eingriff mit der Innenseite des Hohlschaftkegels tritt. Bei der Betätigung der Hutmutter verlagern sich also die Spannbacken und das Rahmenelement. Dessen Durchlass ist so ausgebildet, dass dieser in beiden Funktionsstellungen mit den Kanalabschnitten im ersten und zweiten Teil der Schnittstelle fluchtet und keine Umlenkungen negativ auf das Kühl-/Schmiermittel einwirken können.

Besonders bevorzugt wird ein Ausführungsbeispiel der Schnittstelle, bei dem ein Röhrchen durch den ersten Kanalabschnitt im ersten Teil, durch den Durchlass im Rahmenelement und durch den zweiten Kanalabschnitt im zweiten Teil der Schnittstelle führt. Damit ist gewährleistet, dass über die gesamte Länge der Schnittstelle eine durchgehende glatte Innenfläche für die Kühl-/Schmiermittelzufuhr gewährleistet ist.

Weitere Ausgestaltungen ergeben sich aus den übrigen Unteransprüchen.

Die Erfindung wird im Folgenden anhand der Zeichnungen näher erläutert.

Es zeigen:
- Figur 1: einen Längsschnitt durch eine Schnittstelle in entspanntem Zustand;
- Figur 2: einen Querschnitt durch die in Figur 1 dargestellte Schnittstelle;
- Figur 3: einen Längsschnitt durch die Schnittstelle in verspanntem Zustand;
- Figur 4: einen Querschnitt durch die Schnittstelle gemäß Figur 3;
- Figur 5: eine vergrößerte Seitenansicht eines Rahmenelements der Schnittstelle;
- Figur 6: eine Draufsicht des Rahmenelements gemäß Figur 5;
- Figur 7: eine Spannpatrone der Schnittstelle in Seitenansicht und
- Figur 8: eine Draufsicht auf die Spannpatrone gemäß Figur 7.

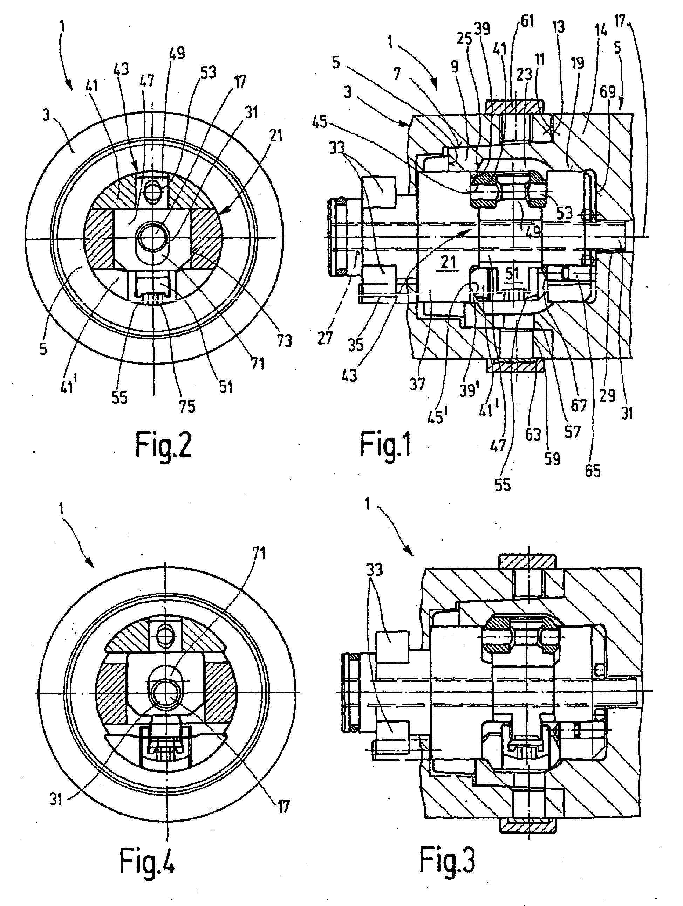

Figur 1 zeigt eine Schnittstelle 1 in Längsschnitt mit einem ersten Teil 3, bei dem aus Gründen der besseren Übersicht Teile weggebrochen wurden, und einem zweiten Teil 5. Das erste Teil 3 dient als Aufnahme des zweiten Teils und ist daher mit einem Innenkegel 7 versehen, in den ein vorzugsweise hohl ausgebildeter Kegel des zweiten Teils 5, ein so genannter Hohlschaftkegel 9, eingeführt ist. An der Stirnseite des ersten Teils 3 ist eine als Ringfläche ausgebildete erste Planfläche 11 vorgesehen, die mit einer zweiten Planfläche 13 am zweiten Teil 5 zusammenwirkt. Diese ist an dem dem freien Ende 15 des Hohlschaftkegels 9 gegenüberliegenden Ende desselben angeordnet.

Die zweite Planfläche 13 wird dadurch realisiert, dass der Grundkörper 14 des zweiten Teils 5, von dem aus Gründen der Übersichtlichkeit bei der hier gewählten Darstellung Teile weggebrochen sind, im Bereich der zweiten Planfläche 13 einen größeren Außendurchmesser aufweist als der Hohlschaftkegel 9.

Die beiden Planflächen 11 und 13 liegen in jeweils einer senkrecht zur Mittelachse 17 der Schnittstelle 1 verlaufenden Ebene. Bei der hier dargestellten Darstellung, die die Schnittstelle 1 in entspanntem Zustand zeigt, liegen die beiden Planflächen 11 und 13 in einem Abstand zueinander.

In den Hohlschaftkegel 9 ist eine - hier zylindrische - Bohrung 19 eingebracht, die der Aufnahme einer als Spannpatrone 21 ausgebildeten Spanneinrichtung dient. In die Wandung der zylindrischen Bohrung 19 ist eine Ringnut 23 mit einer unter einem Winkel von vorzugsweise 30° zur Mittelachse 17 verlaufenden Spannschulter 25 eingebracht.

Die Spannpatrone 21 weist eine durchgehende zentrale, vorzugsweise als Bohrung 27 ausgebildete Durchgangsöffnung auf, die sich bei der Darstellung gemäß Figur 1 nach links in einem hier nicht dargestellten ersten Kanalabschnitt im ersten Teil 3 fortsetzt und nach rechts in einem zweiten Kanalabschnitt 29, der in das zweite Teil 5 eingebracht ist. Dieser kann beispielsweise durch eine Bohrung im Grundkörper 14 des zweiten Teils 5 realisiert werden. Die Mittelachsen der beiden Kanalabschnitte, und der Bohrung 27 fallen mit der Mittelachse 17 der Schnittstelle 1 zusammen. In den ersten Kanalabschnitt, in die Bohrung 27 und den zweiten Kanalabschnitt 29 ist vorzugsweise ein Röhrchen 31 eingesetzt, das einen durchgehend gleichen Innendurchmesser aufweist und damit als Teil einer Kühl-/Schmiermittel-Zufuhr dient.

Auf der Außenwand der Spannpatrone 21 sind zwei Vorsprünge 33 vorgesehen, die Teil einer Bajonettverriegelung sind. Mit dieser wird die Spannpatrone 21 im ersten Teil 3 fest verankert. Deren Verriegelungsposition wird mittels eines Schwerspannstifts 35 gesichert.

In den Grundkörper 37 der Spannpatrone 21 sind zwei Ausnehmungen 39, 39' eingebracht, die der Aufnahme von Spannbacken 41, 41' dienen. Da die Schnittstelle 1 in Figur 1 in entspanntem Zustand dargestellt ist, befinden sich die Spannbacken 41, 41' in ihrem radial nach innen verlagerten Zustand, also in minimalem Abstand zur Mittelachse 17. Die Spannbacken 41, 41' wirken mit einer Betätigungseinrichtung 43 zusammen, die diese radial nach innen und außen verlagern kann. Figur 1 zeigt, dass die Spannbacken 41, 41' auf ihrer radial außen liegenden Seite mit einer Spannfläche 45, 45' versehen sind, die mit der Spannschulter 25 zusammenwirken.

Die Betätigungseinrichtung 43 umfasst ein Rahmenelement 47, an dem oberhalb der Mittelachse 17 ein erster Zapfen 49 und unterhalb der Mittelachse ein zweiter Zapfen 51 vorgesehen ist. Am oberen ersten Zapfen 49 ist die erste Spannbacke 41 und am unteren zweiten Zapfen die zweite Spannbacke 41' angebracht, wobei die erste Spannbacke 41 mittels eines - hier parallel zur Mittelachse 17 verlaufenden - Sicherungsstifts 53 fest mit dem ersten Zapfen 49 verbunden ist und die zweite Spannbacke 41' über ein Gewinde mit dem zweiten Zapfen 51. Bei dem hier dargestellten Ausführungsbeispiel ist zwischen dem zweiten Zapfen 51 und der zweiten Spannbacke 41' eine Hutmutter 55 vorgesehen.

Die Betätigungseinrichtung 43 ist von außen zugänglich. Dazu ist vorzugsweise in den Hohlschaftkegel 9 eine erste Ausnehmung 57 und in die Wandung des ersten Teils 3 eine mit dieser fluchtende zweite Ausnehmung 59 eingebracht. Die zweite Ausnehmung 59 ist von einem umlaufenden Abdeckring 61 überspannt, der in axialer Richtung, das heißt in Richtung der Mittelachse 17 verlagerbar ist und die zweite Ausnehmung 59 gegen Eindringen von Schmutz schützt. Bei dem hier dargestellten Ausführungsbeispiel ist auf der der Schnittstelle 1 zugewandten Seite des Abdeckrings 61 ein Gummielement 63 vorgesehen, das einerseits eine Lagesicherung des Abdeckrings 61 gewährleistet und andererseits auch die Dichtungseigenschaften im Bereich der zweiten Ausnehmung 59 verbessert. Es ist im Übrigen möglich, den Abdeckring 61 mit einer radialen Ausnehmung zu versehen und diesen so zu verdrehen, dass bei Bedarf diese Ausnehmung mit der ersten und zweiten Ausnehmung 57 und 59 fluchtet, um die Betätigungseinrichtung zugänglich zu machen.

In den Grundkörper 37 der Spannpatrone 21 ist ein im Wesentlichen parallel zur Mittelachse 17 verlaufender Auswerferstift 65 eingebracht, der über eine Schrägfläche 67 an der zweiten Spannbacke 41' im entspannten Zustand der Schnittstelle 1 axial nach rechts verlagert und gegen einen Boden 69 der zylindrischen Bohrung 19 gepresst wird und damit das erste und zweite Teil 3 und 5 der ersten Schnittstelle auseinander schiebt und eine einfache Entnahme des zweiten Teils 5 aus dem ersten Teil 3 ermöglicht.

Figur 2 zeigt die in Figur 1 dargestellte Schnittstelle im Querschnitt. Gleiche Teile sind mit gleichen Bezugsziffern versehen, so dass insofern auf die Beschreibung zu Figur 1 verwiesen wird.

Die Darstellung zeigt, dass die beiden Teile 3 und 5 konzentrisch ineinander liegen. Erkennbar ist auch, dass sich die Spannbacken 41, 41' in ihrer zurückgezogenen Position befinden. Die Hutmutter 55 ist ganz auf den zweiten Zapfen 51 aufgeschraubt, also in minimalem Abstand zur Mittelachse 17 angeordnet. Konzentrisch zu dieser liegt das Röhrchen 31.

Figur 2 zeigt auch die Betätigungseinrichtung 43 mit dem Rahmenelement 47 und den daran ansetzenden Zapfen 49 und 51. Das Rahmenelement 47 ist mit einem senkrecht zur Bildebene verlaufenden Durchlass 71 versehen, der als Langloch ausgebildet ist. Der Durchlass ist so dimensioniert, dass das Röhrchen 31 durch diesen hindurchgeführt werden kann und zwar in beiden Funktionsstellungen, von denen hier die erste, die Entriegelungsstellung, dargestellt ist.

Das Spannelement 21 ist mit einer Ausnehmung 73 versehen, deren Mittelachse mit einer hier senkrecht stehenden Durchmesserlinie zusammenfällt und die so groß gewählt ist, dass diese das Rahmenelement 47 aufnehmen kann. Die Seitenwände der Ausnehmung 73 führen das Rahmenelement 47 bei seiner Bewegung, die zum Verspannen/Entspannen der beiden Teile 3 und 5 führt.

Figur 2 zeigt noch, dass die Hutmutter 55 mit einer Betätigungsöffnung 75 versehen ist, beispielsweise mit einer sechseckigen Ausnehmung, in die ein als Inbusschlüssel ausgebildetes Betätigunselement eingreifen kann. Die Form der Ausnehmung ist jedoch für die Funktion der Betätigungseinrichtung belanglos.

Figur 3 zeigt die Schnittstelle 1 in gespanntem Zustand. Alle Elemente der Spanpatrone 21 entsprechen denen, die in Figur 1 und 2 erläutert und beschrieben wurden. Auf diese wird daher nicht näher eingegangen.

Zum Verspannen der beiden Teile 3 und 5 der Schnittstelle 1 wird die Betätigungseinrichtung 43 aktiviert. Mittels eines Betätigungselements, beispielsweise eines Inbusschlüssels, wird durch die erste und zweite Ausnehmung 57 und 59 in die Betätigungsöffnung 75 der Hutmutter 55 eingegriffen und diese in Rotation versetzt. Bei einer Drehung in eine erste Richtung wird die Hutmutter 55 aus der den Figuren 1 und 2 dargestellten Positionen verlagert, in der sie sich in minimalem Abstand zur Mittelachse 17 befindet: Die Hutmutter 55 wird also auf dem zweiten Zapfen 51 nach außen verlagert. Dieser ist dazu mit einem Außengewinde versehen, das mit einem Innengewinde in der Hutmutter kämmt. Die Hutmutter 55 ist ihrerseits auf ihrer Außenseite mit einem Außengewinde versehen, welches mit einem Innengewinde in der zweiten Spannbacke 41' kämmt. Bei einer Drehung der Hutmutter 55, beispielsweise gegen den Uhrzeigersinn, wird die Hutmutter gegenüber der Mittelachse der Schnittstelle 1 nach außen verlagert. Damit wird auch die Spannbacke 41' nach außen verlagert, so dass eine Druckkraft in radialer Richtung auf das Rahmenelement 47 ausgeübt wird. Dadurch wird auch die erste Spannbacke 41 radial nach außen verlagert. Die beiden Spannbacken bewegen sich also in entgegengesetzter Richtung gegenüber der Mittelachse 17 und fahren in die Ringnut 23 ein. Dadurch wirken die Spannflächen 45, 45' der Spannbacken 41, 41' mit der Spannschulter 25 zusammen. Die Flächen der Spannflächen und der Spannschulter sind so ausgerichtet, dass das zweite Teil 5 in Richtung der Mittelachse 17 nach links in den Innenkegel 7 verlagert wird, bis die Planflächen 11 und 13 fest aneinander liegen. Die Spannbacken 41, 41' bilden mit der Spannschulter 25 ein Keilgetriebe aus, das der Verlagerung des Hohlschaftkegels 9 in Richtung der Mittelachse 17 nach links dient, wenn die Spannbacken radial nach außen gedrückt werden.

Durch die radiale Auswärtsbewegung der Spannbacken 41, 41' wird der Hohlschaftkegel 9 ausgeweitet, so dass seine Außenfläche fest an der Innenfläche des Innenkegels 7 anliegt, was zu einer sehr genauen Verspannung der Teile 3 und 5 der Schnittstelle 1 führt und zu einer sehr hohen Steifigkeit. Dadurch, dass im Bereich des Hohlschaftkegels 9, also in den Figuren 1 und 3 links von der ersten Planfläche 11, auf die Betätigungseinrichtung 43 eingewirkt wird, ergibt sich eine sehr kurze Baulänge und damit eine hohe Genauigkeit und Stabilität der Schnittstelle.

Figur 4 zeigt die Schnittstelle 1 in verspanntem Zustand. Deutlich erkennbar ist, dass die Spannbacken 41, 41' radial nach außen verlagert wurden. Dabei wird auch das Rahmenelement 47 verlagert. Aus Figur 4 wird, insbesondere in Vergleich zu Figur 2, deutlich, dass das Rahmenelement 47 beim Verspannen der Schnittstelle nach oben verlagert wird. Dadurch, dass der Durchlass 71 als Langloch ausgebildet ist, kann auch bei einer Verlagerung des Rahmenelements 47 in seine zweite Funktionsstellung das Röhrchen 31 koaxial zur Mittelachse 17 der Schnittstelle 1 angeordnet bleiben.

Insgesamt zeigt sich, dass das Röhrchen 31 sowohl im entspannten Zustand als auch im verspannten Zustand der Schnittstelle 1 durch den Durchlass 71 geführt werden kann. Damit ist eine geradlinige Kühl-/Schmiermittelzufuhr ohne irgendwelche Umlenkungen möglich, so dass Entmischungen und Versackungen sicher vermieden werden können. Dies insbesondere dann, wenn das Röhrchen 31 durchgehend einen konstanten Durchmesser und eine glatte Innenwand aufweist.

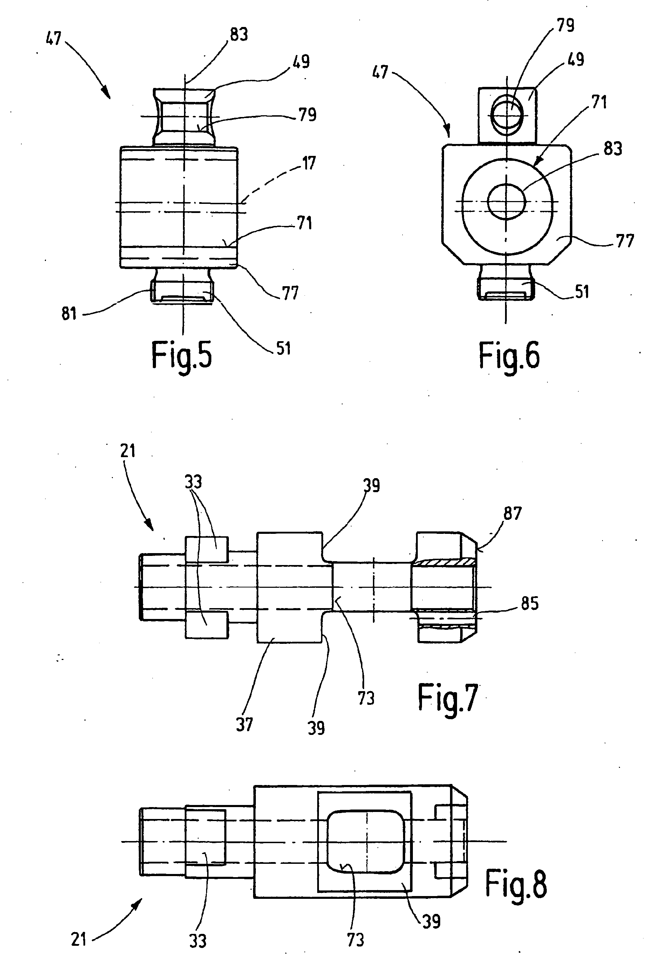

Figur 5 zeigt - etwas vergrößert - das Rahmenelement 47 in Seitenansicht. Bei dieser Darstellung wird deutlich, dass auf einer Seite des Grundkörpers 77 des Rahmenelements 47 der erste Zapfen 49 entspringt, der senkrecht zur Mittelachse 17 der Schnittstelle 1 verläuft. In Figur 5 sind zwei parallele gestrichelte Linien erkennbar, die den Verlauf der Mittelachse 17 der Schnittstelle 1 in den verschiedenen Funktionsstellungen der Betätigungseinrichtung 43 zeigen. Ist die Schnittstelle 1 entspannt, verläuft die Mittelachse 17 der Schnittstelle 1 weiter oben als in verspanntem Zustand. Dies zeigt besonders deutlich ein Vergleich der Figuren 2 und 4: In entspanntem Zustand der Schnittstelle 1 verläuft die Mittelachse 17, damit auch das Röhrchen 31, oben innerhalb des Durchlasses 71. Wird das Rahmenelement 47 zum Verspannen der Schnittstelle 1 nach oben verlagert, so verläuft die Mittelachse 17 weiter unten durch den Durchlass 71. Damit ist auch das Röhrchen 31 weiter unten angeordnet, was aus Figur 4 ersichtlich ist.

Der erste Zapfen 49 ist mit einer Ausnehmung 79 versehen, die der Aufnahme des Sicherungsstifts 53 dient, der in den Figuren 1 und 3 dargestellt ist.

Diametral gegenüber dem ersten Zapfen 49 ist der zweite Zapfen 51 angeordnet. Hier ist deutlich erkennbar, dass er mit einem Außengewinde 81 versehen ist, welches mit einem Innengewinde der hier nicht dargestellten Hutmutter 55 kämmt. Wird diese in einer ersten Richtung verdreht, verlagert sich diese in Richtung der Mittelachse 83 der beiden Zapfen 49 und 51 in Richtung auf die Mittelachse 17. Bei einer entgegengesetzten Drehrichtung verlagert sie sich nach außen und entfernt sich vom Grundkörper 77 des Rahmenelements 47. Diese Position ist in Figur 4 dargestellt, während die radial innen liegende Position der Hutmutter 55 in Figur 2 wiedergegeben ist.

Bei der Darstellung gemäß Figur 6 ist das Rahmenelement 47 um 90° gedreht, so dass man auf den Durchlass 71 im Grundkörper 77 des Rahmenelements 47 sieht. Durch eine Kreislinie 83 ist die Außenkontur des Röhrchens 31 angedeutet. Es wird deutlich, dass die Abmessungen des Durchlasses 71 so gewählt sind, dass das Röhrchen 31 in beiden Funktionsstellungen der Betätigungseinrichtung 43 durch den Durchlass 71 hindurchgeführt werden kann. Auch ohne ein derartiges Röhrchen ist in beiden Fällen ein geradlinig durchgehender Kühl-/Schmiermittelkanal realisierbar.

Figur 6 zeigt auch die einander gegenüberliegenden Zapfen 49 und 51. Hier ist die Ausnehmung 79 durch die der Sicherungsstift 53 geführt werden kann, in Draufsicht dargestellt.

Figur 7 zeigt die Spannpatrone 21 ohne irgendwelche Einbauteile. Gleiche Teile sind mit gleichen Bezugsziffern versehen, so dass insofern auf die Beschreibung zu den vorangegangenen Figuren verwiesen wird.

Am linken Ende der Spannpatrone 21 sind die Vorsprünge 33 erkennbar, die Teil der Bajonettverriegelung sind, mittels derer die Spannpatrone im ersten Teil 3 der Schnittstelle 1 verankert wird. Erkennbar sind im Übrigen Ausnehmungen 39, 39', in denen die Spannbacken 41, 41' zu liegen kommen. Figur 7 zeigt auch die Ausnehmung 73, die den Grundkörper 37 der Spannpatrone von oben nach unten durchdringt und der Aufnahme des Rahmenelements 47 dient.

Der rechte, vordere Teil der Spannpatrone 21 ist im Teilschnitt dargestellt, um eine Bohrung 85 zu zeigen, in welcher der Auswerferstift 65 untergebracht ist. Die Länge des Auswerferstifts ist so gewählt, dass dieser einerseits etwas in die Ausnehmung 39' hineinragt, um dort mit der Spannbacke 41' zusammenwirken zu können. Andererseits ragt der Auswerferstift 65 nach recht über die Stirnseite 87 der Spannpatrone 21 hinaus, um eine Druckkraft auf den Boden 69 der zylindrischen Bohrung 19 im zweiten Teil 5 ausüben zu können, die der Trennung der beiden Teile 3 und 5 dient, wenn die Schnittstelle 1 in entspanntem Zustand ist.

Figur 8 zeigt schließlich die in Figur 7 dargestellte Spannpatrone 21 in Draufsicht. Gleiche Teile sind mit gleichen Bezugsziffern versehen. Ersichtlich ist hier die rechteckige Kontur der Ausnehmung 39 und die den Boden der Ausnehmung durchstoßende Ausnehmung 73, die der Aufnahme des Rahmenelements 47 dient.

Im Folgenden wird noch einmal im Einzelnen auf die Funktion der Schnittstelle 1 eingegangen:

Bei der Schnittstelle 1 kann es sich um eine beliebige Verbindungsstelle zwischen einer mit einer Maschinenspindel versehenen Werkzeugmaschine und einem Werkzeug handeln, wobei auch Verbindungsstellen zwischen Zwischenelementen, Verlängerungsteilen und Adaptern untereinander, mit der Maschinenspindel und/oder mit einem Werkzeug hier angesprochen werden. Vorzugsweise handelt es sich bei der hier dargestellten Schnittstelle 1 um eine Maschinenspindel, die das erste Teil 3 darstellt, und ein Werkzeug, welches das zweite Teil 5 darstellt.

Die Verbindung zwischen Maschinenspindel und Werkzeug wird dadurch bewerkstelligt, dass zunächst in entspanntem Zustand, das Werkzeug, also das zweite Teil 5 in die Maschinenspindel, also in das erste Teil 3 eingesetzt wird, wobei der Hohlschaftkegel 9 in den Innenkegel 7 eingreift. Die Planfläche 11 des ersten Teils 3 liegt in einem geringen Abstand zur zweiten Planfläche 13 des zweiten Teils 5. Die Spannbacken 41, 41' liegen im radial inneren eingezogenen Zustand in minimalem Abstand zur Drehachse 17. Dies wird dadurch erreicht, dass durch ein Betätigungselement, beispielsweise durch einen Inbusschlüssel, durch die Ausnehmungen 59 und 57 in die Betätigungsöffnung 75 der Hutmutter 55 eingegriffen und diese so verdreht wird, dass sie in ihrer maximal innen liegenden Position, also in minimalem Abstand zur Mittelachse 17 angeordnet ist. Durch die Drehung der Hutmutter 55 wird nicht nur diese in Richtung der Mittelachse 17 bewegt. Es wird auch die mit der Hutmutter 55 zusammenwirkende Spannbacke 41' in Richtung auf die Mittelachse 17 bewegt. Da schließlich die Spannbacke 41' am Grundkörper 37 der Spannpatrone 21 anliegt, wird die gegenüberliegende Spannbacke 41 ebenfalls nach innen gezogen. Die Spannbacken 41, 41' werden vorzugsweise so ausgebildet, dass ihre Außenfläche mit der Umfangsfläche der Spannpatrone 21 fluchtet, wenn diese ganz in radialer Richtung nach innen verlagert sind.

Die hier angesprochene Position ist in den Figuren 1 und 2 dargestellt, aus der die Schnittstelle 1 in entspanntem Zustand ersichtlich ist und die Betätigungseinrichtung 43 in ihrer ersten Funktionsstellung angeordnet ist, nämlich in der Entriegelungsstellung.

Zum Verspannen der Schnittstelle 1 wird die Betätigungseinrichtung 43 aktiviert. Das heißt, die Hutmutter 55 wird so verdreht, dass sich diese auf den zweiten Zapfen 51 nach außen verlagert und dabei die zugehörige Spannbacke 41' mitnimmt und ebenfalls nach außen verlagert. Die Verlagerung der Spannbacke 41' beruht einerseits auf der Auswärtsbewegung der Hutmutter, hier andererseits aber auch darauf, dass auf der Hutmutter 55 ein Außengewinde vorgesehen ist, das mit dem Innengewinde in der Spannbacke 41' zusammenwirkt, so dass auch eine Relativbewegung zwischen Hutmutter 55 und Spannbacke 41' stattfindet. Das Innen- und Außengewinde der Hutmutter 55 hat die gleiche Steigung, um eine gleichmäßige Bewegung der Spannbacken 41, 41' zu bewirken.

Bei einer Verdrehung der Hutmutter 55 verlagern sich nicht nur die Spannbacken 41, 41' diametral zueinander nach innen oder außen, vielmehr wird auch das Rahmenelement 47 nach oben oder unten bewegt: Zur Erreichung der entspannten Position der Schnittstelle 1 wird das Rahmenelement 47 nach unten und zum Erreichen der verspannten Funktionsstellung nach oben bewegt.

Beim Verspannen der beiden Teile 3 und 5 miteinander werden die Spannbacken 41, 41' nach außen verlagert. Durch die oben beschriebene Wirkung der Spannflächen 45, 45' mit der Spannschulter 25 wird der Hohlschaftkegel 9 nach links in das Innere des Innenkegels 7 gezogen, weil die Spannpatrone 21 sicher im ersten Teil 3 mittels des Bajonettverschlusses verankert und in axialer Richtung nicht verlagerbar ist. Dabei wird der Hohlschaftkegel 9 aufgeweitet und an die Innenwand des Innenkegels 7 angepresst. Gleichzeitig werden die Planflächen 11 und 13 fest aneinander gepresst, so dass eine optimale Ausrichtung und eine sehr hohe Steifigkeit der Schnittstelle 1 erreicht werden. Da die Spannbacke 41' radial nach außen bewegt wird, kann der Auswerferstift 45 nach links in das Innere der Ausnehmung 39' verlagert werden. Bei einer entgegengesetzten Bewegung der Spannbacke 41' wirkt eine der Mittelachse 17 unter einem Winkel zugewandte Schrägfläche auf den Auswerferstift 75 so ein, dass dieser nach rechts geschoben wird und gegen den Boden. 69 der zylindrischen Bohrung 19 anschlägt. Bei einer weiteren nach innen gerichteten Verlagerung der Spannbacke 41' wird der Auswerferstift 75 mit einer so großen Kraft nach rechts bewegt, dass die beiden Teile 3 und 5 auseinander geschoben werden und leicht trennbar sind.

Die mit der Betätigungseinrichtung 43 aufbringbaren Kräfte sind so groß, dass eine sichere Verspannung der Teile 3 und 5 auch bei einem manuellen Wechsel des Werkzeugs möglich ist. Ebenso kann bei einer manuellen Aktivierung der Betätigungseinrichtung 43 eine so große Kraft aufgebracht werden, dass die beiden Teile 3 und 5 mittels des Auswerferstifts 65 getrennt werden können.

Durch das Rahmenelement 47 der Betätigungseinrichtung 43 ist es möglich, eine zentrale Kühlmittelzufuhr zu realisieren. Dabei fluchtet ein erster Kanalabschnitt im ersten Teil 3 mit dem Durchlass 71 im Rahmenelement 47 und mit einem zweiten Kanalabschnitt 29 im zweiten Teil 5. Da der Durchlass 71 als Langloch ausgebildet ist, ist in beiden Funktionsstellungen, die in den Figuren 2 und 4 dargestellt sind, ein zentraler Durchlass für das Kühl-/Schmiermittel realisierbar. Vorzugsweise wird hier ein Röhrchen 31 eingesetzt, um im Bereich der Kühl-/Schmiermittelzufuhr alle Absätze und Kanten zu vermeiden, die bei Einsatz einer Minimalmengenschmierung eine Entmischung und ein Versacken des Luft/Ölgemisches fördern würden.

Dadurch, dass bei dem hier dargestellten Ausführungsbeispiel die Aktivierung der Betätigungseinrichtung 43 im Bereich des Hohlschaftkegels 9, also links von der ersten Planfläche 11, realisiert wird, wird bei Gewährleistung einer optimalen Schmierung auch bei Minimalmengenschmierung eine sehr kurze Baulänge verwirklicht, was zu einer sehr hohen Steifigkeit der Schnittstelle 1 und durch kurze Auskraglänge zu einem genauen Rundlauf führt.

Im Übrigen zeigt sich, dass die Schnittstelle 1 sehr einfach aufgebaut ist, weil die Spannpatrone 21 und deren Betätigungseinrichtung 43 nur weniger Teile bedürfen.

Um die Schnittstelle 1 vor Verschmutzungen zu schützen, ist der Abdeckring 61 vorgesehen, der die Zugriffsstelle auf die Betätigungseinrichtung 43 im Betrieb abdeckt und bei Bedarf freigibt. Dabei ist es denkbar, den Abdeckring 61 zur Freigabe des Zugriffs in axialer Richtung der Schnittstelle 1 zu verlagern oder aber mit einer radial verlaufenden Ausnehmung zu versehen, die dann durch eine Drehung des Rings die Zugriffsöffnungen zur Betätigungseinrichtung freigeben kann, während diese im Betriebsfall abgedeckt bleiben.

Aus den Erläuterungen wird deutlich, dass bei Beibehaltung des hier beschriebenen Grundprinzips die Betätigungseinrichtung 43 auch anders ausgestaltet werden kann. Beispielsweise ist es möglich, den zweiten Zapfen 51 drehbar im Grundkörper 77 des Rahmenelements 47 zu verankern. Wird dieser mit einem Außengewinde versehen, welches mit einem Innengewinde in der zweiten Spannbacke 41' kämmt, wird diese bei einer Drehung des zweiten Zapfens 51 in radialer Richtung nach innen oder außen bewegt. Dies führt zum Ent- oder Verspannen der Schnittstelle 1. Bevorzugt wird jedoch die hier beschriebene Ausführungsform mit der Hutmutter 55, weil hier durch eine Drehbewegung der Hutmutter 55 eine größere axiale Verlagerung der Spannbacke 41' bewirkt werden kann.

Entsprechend wäre es denkbar, eine mit einem Innengewinde versehene Hülse in der zweiten Spannbacke 41' drehbar zu verankern, die in radialer Richtung zur Mittelachse 17 innerhalb der Spannbacke 41' nicht verlagerbar ist und mit einem Außengewinde am zweiten Zapfen 51 zusammenwirkt. Auch hier ergäbe sich aber bei einem bestimmten Drehwinkel eine geringere axiale Verlagerung der Spannbacke als bei der hier dargestellten Ausführungsform mit der Hutmutter 55.

Entscheidend ist, dass die Betätigungseinrichtung 43 so realisiert ist, nämlich ein Rahmenelement 47 aufweist, dass bei einer Verlagerung quer zur Drehachse 17 ein zentraler Kühl-/Schmiermittelkanal nicht behindert wird. Dies kann, wie oben beschrieben, durch einen entsprechenden Durchlass 71 im Rahmenelement 47 erreicht werden. Übergänge, Kanten und dergleichen zwischen dem ersten Teil 3 und der Spannpatrone 21 sowie zwischen dieser und dem zweiten Teil 5 können durch ein Röhrchen 31 vermieden werden, das oben im Einzelnen erläutert wurde. Im Übrigen vermeidet dieses Röhrchen auch Kanten und Übergänge im Bereich des Durchlasses 71 des Rahmenelements 47. Es ermöglicht also eine störungsfreie Kühl-/Schmiermittelzufuhr im Bereich der Schnittstelle 1.

Außerdem wird eine sehr kurze Bauform erreicht, die dadurch realisiert wird, dass die Planfläche 11 sehr nahe an den Lagerstellen einer hier nicht dargestellten Maschinenspindel, die hier dem ersten Teil 3 entsprechen könnte, angeordnet ist.

## Patentansprüche

1. Schnittstelle (1) eines Werkzeugs mit
- einem eine als Innenkegel (7) ausgebildete Aufnahme umfassenden ersten Teil (3), das einen zu dessen Mittelachse konzentrisch angeordneten ersten Kanalabschnitt aufweist.
- einem einen in die Aufnahme einführbaren Hohlschaftkegel (9) aufweisenden zweiten Teil (5), das einen zu dessen Mittelachse konzentrisch angeordneten zweiten Kanalabschnitt (29) und eine Bohrung (19) mit einer Wandung aufweist, die mit einer eine Spannschulter (25) umfassenden Ringnut (23) versehen ist, wobei die Mittelachsen des ersten und zweiten Teils (3,5) fluchten, und mit
- einer zwei Spannbacken (41, 41') aufweisenden, im ersten Teil (3) verankerten Spannpatrone (21), die eine mit den Spannbacken zusammenwirkende Betätigungseinrichtung (43) umfasst, die mittels eines Betätigungselements aktivierbar ist, wobei die Spannbacken in einer Funktionsstellung von innen in die Ringnut (23) eingreifen,
**dadurch gekennzeichnet, dass** die Spannpatrone (21) eine durchgehende zentrale Durchgangsöffnung aufweist, die sich einerseits in den ersten Kanalabschnitt im ersten Teil (3) und andererseits in den zweiten Kanalabschnitt (29) im zweiten Teil (5) fortsetzt, und dass die Betätigungseinrichtung (43) ein Rahmenelement (47) aufweist, das in zwei Funktionsstellungen verlagerbar ist, und das einen zentralen Durchlass (71) aufweist, der so angeordnet ist, dass die Mittelachsen des ersten und zweiten Teils (3,5) in beiden Funktionsstellungen durch diesen verlaufen.

2. Schnittstelle nach Anspruch 1, **dadurch gekennzeichnet, dass** die Betätigungseinrichtung (43) über eine erste radiale Ausnehmung (57) im Hohlschaftkegel (9) und über eine mit dieser fluchtende, im ersten Teil (3) vorgesehene zweite radiale Ausnehmung (59) zugänglich ist.

3. Schnittstelle nach Anspruch 1 oder 2, **dadurch gekennzeichnet, dass** am Rahmenelement (47) zwei Zapfen (49;51) vorgesehen sind.

4. Schnittstelle nach Anspruch 3, **dadurch gekennzeichnet, dass** der erste Zapfen (49) mit einer ersten Spannbacke (41) verbunden ist.

5. Schnittstelle nach Anspruch 3 oder 4, **dadurch gekennzeichnet, dass** der zweite Zapfen (51) ein Außengewinde (81) aufweist, das mit einer zweiten Spannbacke (41') zusammenwirkt.

6. Schnittstelle nach einem der Ansprüche 2 bis 5, **dadurch gekennzeichnet, dass** eine Hutmutter (55) vorgesehen ist, die mit einem mit dem zweiten Zapfen (51) zusammenwirkenden Innengewinde und mit einem mit der zweiten Spannbacke (41') zusammenwirkenden Außengewinde versehen ist.

7. Schnittstelle nach Anspruch 6, **dadurch gekennzeichnet, dass** die Hutmutter (55) auf ihren den zweiten Zapfen (51) abgewandten Seite mit einer vorzugsweise als Vertiefung ausgebildeten Betätigungsöffnung (75) für ein Betätigungselement versehen ist.

8. Schnittstelle nach einem der vorhergehenden Ansprüche, **dadurch gekennzeichnet, dass** das Innen- und Außengewinde der Hutmutter (55) die gleiche Steigung aufweisen.

9. Schnittstelle nach einem der vorhergehenden Ansprüche, **gekennzeichnet durch** ein Röhrchen (31), das zumindest bereichsweise **durch** den ersten Kanalabschnitt im ersten Teil (3) **durch** den Durchlass (71) im Rahmenelement (47) und zumindest bereichsweise **durch** den zweiten Kanalabschnitt (29) im zweiten Teil (5) ragt.

## Claims

1. Interface (1) of a tool with
- a first part (3) comprising a receptacle in the form of an internal taper (7) and having a first channel portion that is concentric with its center axis,
- a second part (5) which comprises a hollow shaft taper (9) that can be inserted into the receptacle, and having a second channel portion (29) that is concentric with its center axis, and a bore (19) having a wall provided with an annular groove (23) which comprises a clamping shoulder (25), the center axes of the first and second parts (3, 5) being aligned with each other, and with
- a collet chuck (21) anchored in the first part (3), which has two chuck jaws (41, 41') and comprises an actuating device (43) that co-operates with the chuck jaws, the actuating device (43) being activatable by means of an actuating element wherein the chuck jaws, in their working position, engage the annular groove (23) from the inside,
**characterized in that** the collet chuck (21) has a continuous central through-hole extending into the first channel portion in the first part (3) on the one hand and into the second channel portion (29) in the second part (5) on the other hand, and **in that** the actuating device (43) has a frame element (47) displaceable into two working positions, and a central opening (71) disposed such that the center axes of the first and second parts (3, 5) pass through it in both working positions.

2. Interface according to claim 1, **characterized in that** the actuating device (43) is accessible via a first radial recess (57) in the hollow shaft taper (9) and via a second radial recess (59) provided in the first part (3) and aligning with the first recess.

3. Interface according to claim 1 or 2, **characterized in that** the two lugs (49; 51) are provided on the frame element (47).

4. Interface according to claim 3, **characterized in that** the first lug (49) is connected to a first chuck jaw (41).

5. Interface according to claim 3 or 4, **characterized in that** the second lug (51) has an external thread (81) which co-operates with a second chuck jaw (41').

6. Interface according to any one of the claims 2 to 5, **characterized in that** the a cap nut (55) is provided which is furnished with an internal thread co-operating with the second lug (51) and an external thread co-operating with the second chuck jaw (41').

7. Interface according to claim 6, **characterized in that** the cap nut (55) is provided with an actuating opening (75) for an actuating element, preferably configured as an indentation, on the side facing away from the second lug (51).

8. Interface according to any one of the preceding claims, **characterized in that** the internal thread and the external thread of the cap nut (55) have the same pitch.

9. Interface according to any one of the preceding claims, **characterized by** a small tube (31) which projects at least partially through areas of the first channel section in the first part (3) through the passage (71) in the frame element (47) and at least partially through areas of the second channel section (29) in the second part (5).

## Revendications

1. Interface (1) d'un outil avec
- une première partie (3) comprenant un logement ayant la forme d'un cône interne (7), première partie qui présente une première section de canal disposée concentrique à son axe médian,
- une seconde partie (5) présente un cône de tige creux (9) insérable dans le logement et une seconde section de canal (29) disposée concentriquement à son axe médian et un perçage (19) avec une paroi qui est munie d'une rainure annulaire (23) comprenant un épaulement de serrage (25), les axes médians de la première et seconde parties (3, 5) étant alignés et
- une cartouche de serrage (21) ancrée dans la première partie (3) et présentant deux mâchoires de serrage (41, 41'), cartouche qui comprend un dispositif d'actionnement (43) coopérant avec les mâchoires de serrage, lequel peut être activé au moyen d'un élément d'actionnement, les mâchoires de serrage s'engageant dans une position de fonction de l'intérieur dans la rainure annulaire (23),
**caractérisée en ce que** la cartouche de serrage (21) présente une ouverture de passage centrale continu qui se poursuit d'une part dans la première section de canal dans la première partie (3) et d'autre part dans la seconde section de canal (29) dans la seconde partie (5) et **en ce que** le dispositif d'actionnement (43) présente un élément de cadre (47) qui peut être amené dans deux positions de fonction et qui présente un passage central (71) qui est disposé de sorte que les axes médians de la première et de la seconde partie (3, 5) traversent le passage dans les deux positions de fonction.

2. Interface selon la revendication 1, **caractérisée en ce que** le dispositif d'actionnement (43) est accessible par un premier évidement radial (57) dans le cône de tige creux (9) et par un second évidement radial (59) prévu dans la première partie (3) et aligné avec le premier évidement.

3. Interface selon la revendication 1 ou 2, **caractérisée en ce qu'**il est prévu sur l'élément de cadre (47) deux tourillons (49 ; 51).

4. Interface selon la revendication 3, **caractérisée en ce que** le premier tourillon (49) est relié à une première mâchoire de serrage (41).

5. Interface selon les revendications 3 ou 4, **caractérisée en ce que** le second tourillon (51) présente un filet extérieur (81) qui coopère avec la seconde mâchoire de serrage (41').

6. Interface selon l'une des revendications 2 à 5, **caractérisée en ce qu'**il est prévu un écrou borgne (55) qui est muni d'un filet intérieur coopérant avec le second tourillon (51) et d'un filet extérieur coopérant avec la seconde mâchoire de serrage (41').

7. Interface selon la revendication 6, **caractérisée en ce que** l'écrou borgne (55) est muni pour un élément d'actionnement, sur sa face détournée du second tourillon (51), d'une ouverture d'actionnement (75) réalisée de préférence comme une cavité.

8. Interface selon l'une des revendications précédentes, **caractérisée en ce que** le filet intérieur et le filet extérieur de l'écrou borgne (55) présentent le même pas de vis.

9. Interface selon l'une des revendications précédentes, **caractérisée par** un petit tube (31) qui passe du moins par zone par la première section de canal dans la première partie (3) par le passage (71) dans l'élément de cadre (47) et au moins par zone par la seconde section de canal (29) dans la second partie (5).
